# EUROPEAN PATENT SPECIFICATION

(11) **EP 3 587 776 B1**
(45) Date of publication and mention of the grant of the patent: **09.06.2021**
(21) Application number: 19181584.4
(22) Date of filing: 21.06.2019
(51) Int. Cl.: F02D 23/00, F02B 37/00, F02B 37/007, F02B 37/013, F02B 37/24, F02B 37/12

(54) **FORCED INDUCTION SYSTEM**
ZWANGSINDUKTIONSSYSTEM
SYSTÈME À INDUCTION FORCÉE

(30) Priority: 25.06.2018 JP 2018119696
(43) Date of publication of application: 01.01.2020
(73) Proprietor: Kabushiki Kaisha Toyota Jidoshokki, Kariya-shi, Aichi 448-8671 (JP)
(72) Inventor: KAMIYA, Yoshiaki, Kariya-shi,, Aichi 448-8671 (JP); NARUSE, Yuya, Kariya-shi,, Aichi 448-8671 (JP)
(74) Representative: TBK

(56) References cited:
- EP-A1- 1 519 017
- EP-A1- 2 402 576
- FR-A1- 2 915 240
- JP-A- 2005 155 356
- JP-A- 2010 209 845

## Description

### BACKGROUND

The present disclosure relates to control of a forced induction system including a plurality of forced induction devices connected in parallel.

### Description of the Background Art

As a forced induction system to perform a forced induction of the intake air of an engine, a system including a plurality of forced induction devices connected in parallel has been known, for example. For example, a forced induction system including two forced induction devices connected in parallel performs switching control for switching between a forced induction mode in which one of the two forced induction devices is used to perform the forced induction of the intake air of the engine (hereinafter also referred to as a single forced induction mode), and a forced induction mode in which both of the forced induction devices are used to perform the forced induction of the intake air of the engine (hereinafter also referred to as a twin forced induction mode).

Execution of such switching control may cause a torque shock if the boost pressure fluctuates before and after the switching. To overcome this problem, for example, Japanese Patent Laying-Open No. 2010-209845 discloses a technique of maintaining a constant exhaust pressure by adjusting the amount of exhaust air to be supplied to a forced induction device that starts to operate at the time of the twin forced induction mode, and by adjusting the opening degree of a variable nozzle mechanism provided in a forced induction device that operates at the time of the single forced induction mode.

JP 2005 155356 A discloses a variable nozzle type turbocharger which is operated independently in a low engine speed zone to increase supercharging efficiency. At a time of switching from single turbocharger operation to double turbocharger operation, the variable nozzle is throttled once to prevent sudden drop of engine back pressure and supercharging pressure.

### SUMMARY

However, maintaining a constant exhaust pressure as described above requires a heat-resistant pressure sensor for monitoring the exhaust pressure, and a control valve that enables fine adjustments of the amount of exhaust air and the opening degree of variable nozzle vanes. This may lead to increase in cost. Thus, it is necessary to reduce the fluctuation in boost pressure during execution of the switching control in a simpler configuration.

An object of the present disclosure is to provide a forced induction system that can reduce the fluctuation in boost pressure at the time of switching between forced induction modes involving a plurality of forced induction devices, in a simpler configuration.

A forced induction system according to an aspect of the present disclosure includes a first forced induction device and a second forced induction device. Each of the first forced induction device and the second forced induction device includes: a turbine provided on an exhaust passage in an engine, the turbine including a turbine wheel configured to be actuated by exhaust air emitted from the engine; a variable nozzle mechanism configured to adjust an opening degree between adjacent nozzle vanes of a plurality of nozzle vanes disposed at an exhaust air entrance to the turbine wheel; and a compressor provided on an intake passage in the engine, the compressor being configured to compress air to be taken into the engine by actuation of the turbine. The forced induction system also includes a control device configured to execute switching control for switching from a first forced induction mode to a second forced induction mode. The first forced induction mode is a mode in which air compressed in the first forced induction device is supplied to the engine. The second forced induction mode is a mode in which air compressed in the first forced induction device and air compressed in the second forced induction device join together to be supplied to the engine. When the execution of the switching control is requested, the control device is configured to perform control so that a first opening degree of the variable nozzle mechanism in the first forced induction device is equal to a second opening degree of the variable nozzle mechanism in the second forced induction device, and execute an approach-run operation in which air compressed by the compressor of the second forced induction device is supplied to the compressor of the first forced induction device while exhaust air is supplied to the turbine of the second forced induction device. The control device is configured to switch to the second forced induction mode after a second boost pressure produced by the compressor of the second forced induction device reaches a first boost pressure produced by the compressor of the first forced induction device during the approach-run operation.

As such, by controlling the first opening degree to be equal to the second opening degree during the approach-run operation, the respective turbine wheels of the first forced induction device and the second forced induction device can be supplied with equal levels of exhaust energy. This provides a good balance between the decrease in the first boost pressure and the increase in the second boost pressure, and allows a high boost pressure at which the second boost pressure reaches the first boost pressure. Thus, when the first forced induction mode switches to the second forced induction mode, the decline in the first boost pressure can be curbed. As a result, the occurrence of torque shock due to fluctuation in boost pressure can be reduced. This control can be performed by equalizing the opening degrees of the variable nozzle mechanisms, which means that the fluctuation in boost pressure can be reduced in a simple configuration.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a diagram showing one example of a general configuration of an engine in the present embodiment.
Fig. 2 is a diagram for explaining the operation of a forced induction system at the time of a single forced induction mode.
Fig. 3 is a diagram for explaining the operation of the forced induction system at the time of an approach-run operation.
Fig. 4 is a diagram for explaining the operation of the forced induction system at the time of a twin forced induction mode.
Fig. 5 is a diagram for explaining the change in boost pressure at the time of switching from the single forced induction mode to the twin forced induction mode.
Fig. 6 is a flowchart showing one example of a process to be executed by a control device.
Fig. 7 is a diagram for explaining one example of the operation of the control device.
Fig. 8 is a diagram for explaining the surging that occurs after switching to the twin forced induction mode.
Fig. 9 is a diagram for explaining the change in operating point of a forced induction device on a compressor map.

### DESCRIPTION OF THE PREFERRED EMBODIMENTS

An embodiment of the present disclosure is hereinafter described with reference to the drawings. In the following description, identical components are identically denoted. They also have identical names and functions. Therefore, the detailed description of such components is not repeated.

### <Configuration of Forced Induction System>

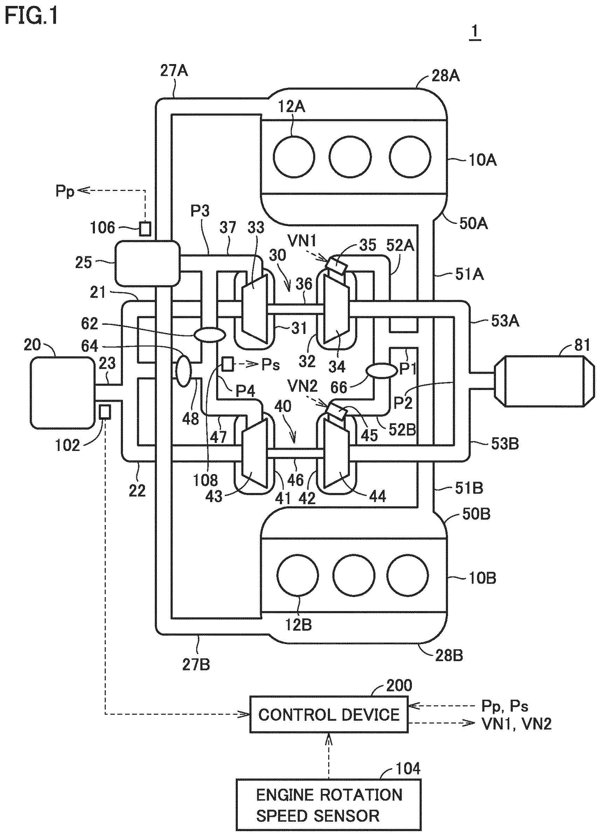

Fig. 1 is a diagram showing one example of a general configuration of an engine 1 in the present embodiment. With reference to Fig. 1, this engine 1 is mounted on a vehicle as a driving source for traveling, for example. Although the present embodiment describes a case in which the engine 1 is a diesel engine as an example, the engine 1 may be a gasoline engine, for example.

The engine 1 includes banks 10A, 10B, an air cleaner 20, an intercooler 25, intake manifolds 28A, 28B, forced induction devices 30, 40, exhaust manifolds 50A, 50B, an exhaust treatment device 81, and a control device 200.

The bank 10A has a plurality of cylinders 12A. The bank 10B has a plurality of cylinders 12B. Each of the cylinders 12A, 12B contains a piston (not shown) therein, and a combustion chamber (a space in which the fuel burns) is defined by the top of the piston and the inner wall of the cylinder. The volume of the combustion chamber changes by sliding the piston in each of the cylinders 12A, 12B. Each of the cylinders 12A, 12B has an injector (not shown). While the engine 1 is operating, the fuel is injected into each of the cylinders 12A, 12B, the timing and amount of the fuel injection being set by the control device 200. The amount and timing of the fuel injection from each injector is set by the control device 200 based on the engine revolution rate NE, the intake air amount Qin, the depth of pressing of the accelerator pedal, the speed of the vehicle, or the like.

The pistons of the cylinders 12A, 12B are linked to a common crankshaft (not shown) via connecting rods. In the cylinders 12A, 12B, the fuel burns in a prescribed order, thus causing the pistons to slide in the cylinders 12A, 12B. The vertical motion of the pistons is converted into a rotational motion of the crankshaft through the connecting rods.

The forced induction device 30 is a turbocharger including a compressor 31 and a turbine 32. The compressor 31 of the forced induction device 30 is provided on an intake passage (i.e., the passage from the air cleaner 20 to the intake manifolds 28A, 28B) in the engine 1. The turbine 32 of the forced induction device 30 is provided on an exhaust passage (i.e., the passage from the exhaust manifolds 50A, 50B to the exhaust treatment device 81) in the engine 1.

The compressor 31 has a compressor wheel 33 rotatably contained therein. The turbine 32 has a turbine wheel 34 and a variable nozzle mechanism 35. The turbine wheel 34 is rotatably contained in the turbine 32. The compressor wheel 33 and the turbine wheel 34 are linked together with a rotation shaft 36 and are integrally rotatable. The compressor wheel 33 is rotated by the energy of exhaust air (exhaust energy) that is supplied to the turbine wheel 34.

The variable nozzle mechanism 35 changes the flow rate of the exhaust air that actuates the turbine 32. The variable nozzle mechanism 35 includes a plurality of nozzle vanes (not shown) and a drive device (not shown). The plurality of nozzle vanes are disposed on the outer periphery of the turbine wheel 34 so as to lead the exhaust air supplied from an exhaust air inlet to the turbine wheel 34. The drive device (not shown) causes each of the plurality of nozzle vanes to rotate so as to change the opening between adjacent nozzle vanes (the opening is hereinafter referred to as a VN opening degree). The variable nozzle mechanism 35 changes the VN opening degree by, for example, rotating the nozzle vanes using the drive device in accordance with a control signal VN1 from the control device 200.

The forced induction device 40 is a turbocharger including a compressor 41 and a turbine 42. The compressor 41 of the forced induction device 40 is provided in parallel with the compressor 31 on the intake passage in the engine 1 so as to compress the intake air of the engine 1. The turbine 42 of the forced induction device 40 is provided in parallel with the turbine 32 on the exhaust passage in the engine 1.

The compressor 41 has a compressor wheel 43 rotatably contained therein. The turbine 42 has a turbine wheel 44 and a variable nozzle mechanism 45. The turbine wheel 44 is rotatably contained in the turbine 42. The compressor wheel 43 and the turbine wheel 44 are linked together with a rotation shaft 46 and are integrally rotatable. The compressor wheel 43 is rotated by the exhaust energy that is supplied to the turbine wheel 44.

The variable nozzle mechanism 45 has the same configuration as the variable nozzle mechanism 35, and thus the detailed explanation thereof is not repeated. The variable nozzle mechanism 45 changes the VN opening degree by, for example, rotating the nozzle vanes using the drive device in accordance with a control signal VN2 from the control device 200.

The air cleaner 20 removes foreign substances from the air taken in through an inlet (not shown). To the air cleaner 20, one end of an intake pipe 23 is connected. The other end of the intake pipe 23 divides into branches, one of which is connected to one end of an intake pipe 21 and the other of which is connected to one end of an intake pipe 22.

The other end of the intake pipe 21 is connected to an intake air inlet of the compressor 31 of the forced induction device 30. To an intake air outlet of the compressor 31 of the forced induction device 30, one end of an intake pipe 37 is connected. The other end of the intake pipe 37 is connected to the intercooler 25. The compressor 31 compresses the air taken in through the intake pipe 21 by rotating the compressor wheel 33, and supplies the compressed air to the intake pipe 37.

The other end of the intake pipe 22 is connected to an intake air inlet of the compressor 41 of the forced induction device 40. To an intake air outlet of the compressor 41 of the forced induction device 40, one end of an intake pipe 47 is connected. The other end of the intake pipe 47 is connected to a connecting portion P3 on the halfway of the intake pipe 37. The compressor 41 compresses the air taken in through the intake pipe 22 by rotating the compressor wheel 43, and supplies the compressed air to the intake pipe 47.

On the halfway of the intake pipe 47, a first control valve 62 is provided. The first control valve 62 is, for example, a normally-off negative pressure switching valve (VSV) which is controlled to be ON/OFF by the control device 200.

One end of a return pipe 48 is connected to a connecting portion P4 located on the upstream side (compressor 41 side) relative to the first control valve 62 on the intake pipe 47. The other end of the return pipe 48 is connected to the intake pipe 21. The return pipe 48 is a passage through which at least a part of the air flowing in the intake pipe 47 returns to the upstream side relative to the compressor 31 of the forced induction device 30. The air returned to the intake pipe 21 through the return pipe 48 is supplied to the compressor 31.

On the halfway of the return pipe 48, a second control valve 64 is provided. The second control valve 64 is, for example, a normally-off solenoid valve which is controlled to be ON/OFF by the control device 200.

The connecting portion P3 is supplied with a flow of air compressed by the compressor 31, and a flow of air compressed by the compressor 41 and passing through the first control valve 62. These flows of air join together at the connecting portion P3 and enter the intercooler 25.

The intercooler 25 is configured to cool the flowed-in air. The intercooler 25 is an air-cooled or water-cooled heat exchanger, for example. The intercooler 25 has two intake air outlets. To one of the outlets of the intercooler 25, one end of an intake pipe 27A is connected. The other end of the intake pipe 27A is connected to the intake manifold 28A. To the other of the outlets of the intercooler 25, one end of an intake pipe 27B is connected. The other end of the intake pipe 27B is connected to the intake manifold 28B.

The intake manifolds 28A, 28B are linked to intake ports (not shown) of the cylinders 12A, 12B in the banks 10A, 10B, respectively. The exhaust manifolds 50A, 50B are linked to exhaust ports (not shown) of the cylinders 12A, 12B in the banks 10A, 10B, respectively.

The exhaust air (burnt gas) emitted from the combustion chambers of the cylinders 12A, 12B to the outside of the cylinders through the exhaust ports is emitted to the outside of the vehicle through the exhaust passage in the engine 1. The exhaust passage includes the exhaust manifolds 50A, 50B, exhaust pipes 51A, 51B, a connecting portion P1, exhaust pipes 52A, 52B, 53A, 53B, and a connecting portion P2. One end of the exhaust pipe 51A is connected to the exhaust manifold 50A. One end of the exhaust pipe 51B is connected to the exhaust manifold 50B. The other end of the exhaust pipe 51A and the other end of the exhaust pipe 51B join together at the connecting portion P1 and then divide into branches, one of which is connected to one end of the exhaust pipe 52A and the other of which is connected to one end of the exhaust pipe 52B.

The other end of the exhaust pipe 52A is connected to an exhaust air inlet of the turbine 32. To an exhaust air outlet of the turbine 32, one end of the exhaust pipe 53A is connected. The other end of the exhaust pipe 52B is connected to an exhaust air inlet of the turbine 42. To an exhaust air outlet of the turbine 42, one end of the exhaust pipe 53B is connected.

On the halfway of the exhaust pipe 52B, a third control valve 66 is provided. The third control valve 66 is, for example, a normally-on negative pressure switching valve (VSV) which is controlled to be ON/OFF by the control device 200.

The other end of the exhaust pipe 53A and the other end of the exhaust pipe 53B join together at the connecting portion P2 and are connected to the exhaust treatment device 81. The exhaust treatment device 81 comprises, for example, an SCR catalyst, an oxidation catalyst, a PM removal filter, or the like, so as to purify the exhaust air flowing from the exhaust pipe 53A and the exhaust pipe 53B.

The operation of the engine 1 is controlled by the control device 200. The control device 200 includes a central processing unit (CPU) to perform various processes; a memory including a read only memory (ROM) to store programs and data, and a random access memory (RAM) to store, for example, the results of the processes performed by the CPU; and input and output ports to exchange information with external components (none of which are shown). To the input port, various sensors and the like (e.g. an air flow meter 102, an engine revolution rate sensor 104, a first pressure sensor 106, and a second pressure sensor 108) are connected. To the output port, the devices to be controlled (e.g. a plurality of injectors and the variable nozzle mechanisms 35, 45) are connected.

The control device 200 controls the various devices so that the engine 1 is in a desired operating status, based on the signals from the sensors and devices and based on the maps and programs stored in the memory. The various types of control are not limited to software processing, but may be processed by dedicated hardware (electronic circuit). The control device 200 also includes a timer circuit (not shown) built therein for time measurement.

The air flow meter 102 detects the intake air amount Qin. The air flow meter 102 sends a signal representing the detected intake air amount Qin to the control device 200.

The engine revolution rate sensor 104 detects the engine revolution rate NE. The engine revolution rate sensor 104 sends a signal representing the detected engine revolution rate NE to the control device 200.

The first pressure sensor 106 detects the pressure in the intake pipe 27A (hereinafter referred to as a first boost pressure) Pp. The first pressure sensor 106 sends a signal representing the detected first boost pressure Pp to the control device 200.

The second pressure sensor 108 detects the pressure at the connecting portion P4 in the intake pipe 47 (hereinafter referred to as a second boost pressure) Ps. The second pressure sensor 108 sends a signal representing the second boost pressure Ps to the control device 200.

In the present embodiment, the forced induction devices 30, 40 and the control device 200 constitute a "forced induction system".

By controlling the first control valve 62, the second control valve 64, and the third control valve 66, the control device 200 can execute switching control for switching between a single forced induction mode and a twin forced induction mode. In the single forced induction mode, only the forced induction device 30 (primary turbocharger) is used to perform forced induction. In the twin forced induction mode, both the forced induction device 30 (primary turbocharger) and the forced induction device 40 (secondary turbocharger) are used to perform forced induction. When the control device 200 switches from the single forced induction mode to the twin forced induction mode, the control device 200 executes an approach-run operation before switching the forced induction mode from the single forced induction mode to the twin forced induction mode. The approach-run operation is an operation in which the forced induction device 40 increases the boost pressure to a certain pressure or higher.

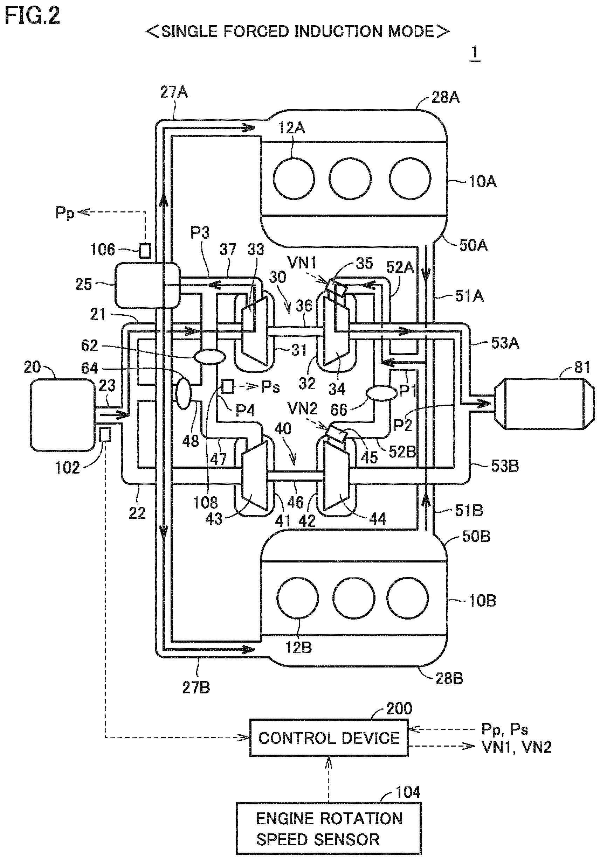

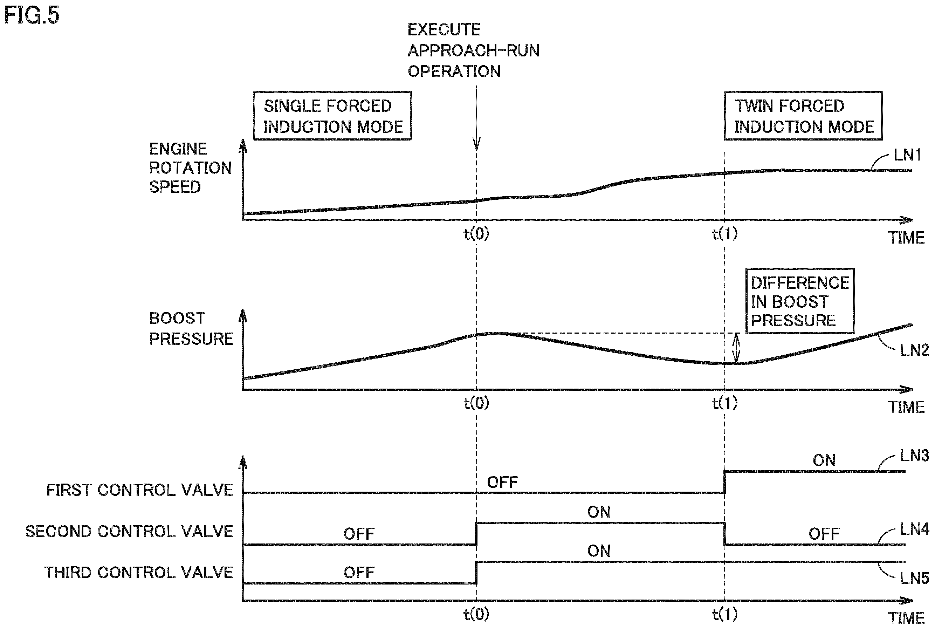

The operations of the forced induction system in the single forced induction mode, the approach-run operation, and the twin forced induction mode are hereinafter described with reference to Fig. 2, Fig. 3, and Fig. 4, respectively. Further, with reference to Fig. 5, described is the change in boost pressure at the time of switching from the single forced induction mode to the twin forced induction mode, with the approach-run operation performed therebetween.

### <Single Forced Induction Mode>

The control device 200 operates the forced induction system in the single forced induction mode when a prescribed execution condition is satisfied. The prescribed execution condition includes, for example, a condition that the operating status of the engine 1 based on the engine revolution rate NE and the intake air amount Qin is a low-load operation. When the forced induction mode is the single forced induction mode, the control device 200 turns on the flag for selecting the single forced induction mode, and turns off the flag for selecting the twin forced induction mode. When the forced induction mode is the single forced induction mode, the control device 200 closes (turns off) all of the first control valve 62, the second control valve 64, and the third control valve 66.

Fig. 2 is a diagram for explaining the operation of the forced induction system at the time of the single forced induction mode. As indicated by the arrows in Fig. 2, the exhaust air in the exhaust manifolds 50A, 50B flows through the exhaust pipe 52A to the turbine 32 of the forced induction device 30, and then flows through the exhaust pipe 53A to the exhaust treatment device 81.

The exhaust air supplied to the turbine 32 causes the turbine wheel 34 to rotate, which in turn causes the compressor wheel 33 to rotate.

The air taken in from the air cleaner 20 flows through the intake pipe 23 and the intake pipe 21 to the compressor 31.

The intake air discharged from the compressor 31 flows through the intake pipe 37 to the intercooler 25.

The intake air that has flowed to the intercooler 25 divides into the intake pipes 27A, 27B and flows to the intake manifolds 28A, 28B, respectively.

### <Approach-Run Operation>

For example, when the forced induction mode is the single forced induction mode and when the revolution rate of the forced induction device 30 exceeds a threshold value, the control device 200 determines that there is a request for switching from the single forced induction mode to the twin forced induction mode. At this time, the control device 200 turns on the flag for requesting switching from the single forced induction mode to the twin forced induction mode, for example. The control device 200 may estimate the revolution rate of the forced induction device 30 based on the flow rate of exhaust air of the engine 1 and based on the opening degree of the variable nozzle mechanism 35, for example.

When there is a request for switching from the single forced induction mode to the twin forced induction mode, the control device 200 executes the approach-run operation. That is, the control device 200 opens (turns on) both the second control valve 64 and the third control valve 66, and closes (turns off) the first control valve 62.

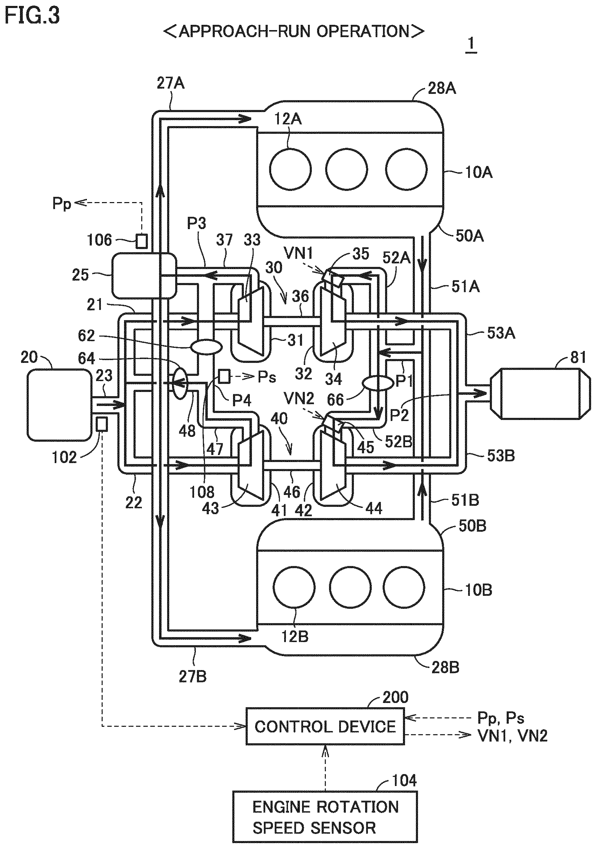

Fig. 3 is a diagram for explaining the operation of the forced induction system at the time of the approach-run operation. As indicated by the arrows in Fig. 3, the flows of exhaust air through the exhaust manifolds 50A, 50B join together at the connecting portion P1 and then divide into the exhaust pipes 52A, 52B. The divided exhaust air flows through both the turbines 32, 42 of the forced induction devices 30, 40, and then flows through the exhaust pipes 53A, 53B to the exhaust treatment device 81.

The exhaust air supplied to the turbine 32 causes the turbine wheel 34 to rotate, which in turn causes the compressor wheel 33 to rotate. The exhaust air supplied to the turbine 42 causes the turbine wheel 44 to rotate, which in turn causes the compressor wheel 43 to rotate.

The air taken in from the air cleaner 20 flows through the intake pipe 23, divides into the intake pipes 21, 22, and flows through both the compressors 31, 41.

The intake air discharged from the compressor 31 flows through the intake pipe 37 to the intercooler 25. The intake air discharged from the compressor 41 flows through the intake pipe 47 and through the connecting portion P4 to the return pipe 48, and then flows from the return pipe 48 through the intake pipe 21 to the compressor 31.

The intake air that has flowed into the intercooler 25 divides into the intake pipes 27A, 27B and flows to the intake manifolds 28A, 28B, respectively. During the approach-run operation, the intake air that is flowing to the intercooler 25 is compressed by the forced induction device 30, while the revolution rate of the forced induction device 40 is increased. As the revolution rate of the forced induction device 40 increases, the pressure of the intake air discharged from the compressor 41 of the forced induction device 40 increases.

### <Twin Forced Induction Mode>

At the timing when the compressing ability of the forced induction device 40 has increased enough during the approach-run operation, the control device 200 operates the forced induction system in the twin forced induction mode. When the forced induction mode is the twin forced induction mode, the control device 200 turns off the flag for selecting the single forced induction mode, and turns on the flag for selecting the twin forced induction mode, for example. When the forced induction mode is the twin forced induction mode, the control device 200 opens (turns on) the first control valve 62, and closes (turns off) the second control valve 64.

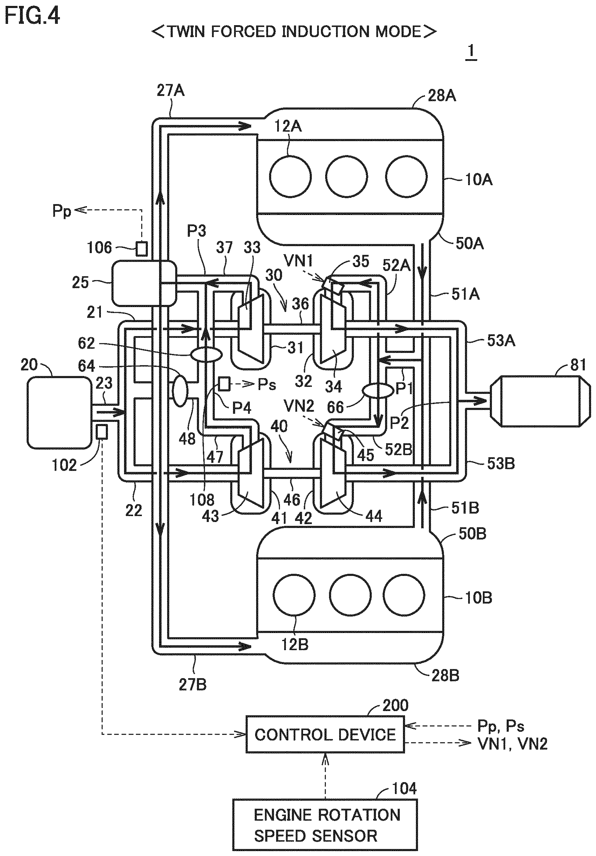

Fig. 4 is a diagram for explaining the operation of the forced induction system at the time of the twin forced induction mode. At the time of the approach-run operation, the intake air discharged from the compressor 41 of the forced induction device 40 enters the return pipe 48 from a halfway point on the intake pipe 47 and flows to the intake pipe 21. On the other hand, at the time of the twin forced induction mode, as indicated by the arrows in Fig. 4, the intake air discharged from the compressor 41 of the forced induction device 40 flows through the intake pipe 47 and then through the intake pipe 37 to the intercooler 25.

In other respects, the flows of exhaust air and intake air are the same as those at the time of the approach-run operation. Thus, the detailed description thereof is not repeated.

### <Change in Boost Pressure at the Time of Switching of Forced Induction Mode>

The change in boost pressure at the time of switching from the single forced induction mode to the twin forced induction mode is hereinafter described with reference to Fig. 5. Fig. 5 is a diagram for explaining the change in boost pressure at the time of switching from the single forced induction mode to the twin forced induction mode.

LN1 in Fig. 5 indicates the change in the engine revolution rate NE. LN2 in Fig. 5 indicates the change in boost pressure (first boost pressure Pp) of the intake air of the engine 1. LN3 in Fig. 5 indicates the change in the open/closed status of the first control valve 62. LN4 in Fig. 5 indicates the change in the open/closed status of the second control valve 64. LN5 in Fig. 5 indicates the change in the open/closed status of the third control valve 66.

For example, suppose the vehicle starts to move and the accelerator opening angle gradually increases. When the operating status of the engine 1 is a low-load operation, the forced induction system operates in the single forced induction mode. Accordingly, as indicated by LN3, LN4, and LN5 in Fig. 5, the first control valve 62, the second control valve 64, and the third control valve 66 are all closed (off-state). At this time, as described with reference to Fig. 2, the intake air from the air cleaner 20 is compressed by the forced induction device 30 and is supplied to the engine 1. Accordingly, as indicated by LN1 in Fig. 5, the amount of exhaust air increases as the engine revolution rate NE increases. Thus, as indicated by LN2 in Fig. 5, the first boost pressure Pp increases.

At the time t(0) when there is a request for switching from the single forced induction mode to the twin forced induction mode (e.g. when the revolution rate of the forced induction device 30 exceeds a threshold value), the approach-run operation is executed. Accordingly, as indicated by LN3, LN4, and LN5 in Fig. 5, the first control valve 62 is maintained in a closed state, and the second control valve 64 and the third control valve 66 are both opened (on-state). At this time, as described with reference to Fig. 3, the intake air from the air cleaner 20 is compressed by the forced induction device 30 and is supplied to the engine 1, and the air compressed by the forced induction device 40 is returned to the intake pipe 21.

The exhaust air emitted from the engine 1 flows through the exhaust pipes 51A, 51B, joins together at the connecting portion P1, and then divides into the exhaust pipes 52A, 52B to be supplied to the turbines 32, 42. That is, the exhaust air which flowed only in the exhaust pipe 52A is now flowing both in the exhaust pipes 52A, 52B. Therefore, as indicated by LN1 and LN2 in Fig. 5, after the time t(0), the first boost pressure Pp decreases although the engine revolution rate NE increases. On the other hand, the second boost pressure Ps increases as the engine revolution rate NE increases because the exhaust air begins to be supplied to the turbine 42.

At the time t(1) when the compressing ability of the forced induction device 40 has increased enough, the forced induction mode is switched to the twin forced induction mode. Accordingly, as indicated by LN3, LN4, and LN5 in Fig. 5, the third control valve 66 is maintained in an open state, the first control valve 62 is switched from a closed state to an open state, and the second control valve 64 is switched from an open state to a closed state. At this time, as described with reference to Fig. 4, the intake air from the air cleaner 20 is compressed by the forced induction devices 30, 40 and is supplied to the engine 1. That is, the intake air discharged from the compressor 31 of the forced induction device 30 and the intake air discharged from the compressor 41 of the forced induction device 40 join together at the connecting portion P3, and are then supplied to the intake manifolds 28A, 28B through the intercooler 25.

The exhaust air emitted from the engine 1 flows through the exhaust pipes 51A, 51B, joins together at the connecting portion P1, and then divides into the exhaust pipes 52A, 52B to be supplied to the turbines 32, 42. Accordingly, the first boost pressure Pp and the second boost pressure Ps increase as the engine revolution rate NE increases.

Thus, the boost pressure decreases during the approach-run operation and then increases after the mode is switched to the twin forced induction mode. Such a fluctuation may cause a torque shock in the engine 1.

To overcome this problem, an attempt may be made to maintain a constant exhaust pressure by, for example, adjusting the amount of exhaust air to be supplied to the turbines 32, 42 of the forced induction devices 30, 40, and/or by adjusting the VN opening degrees of the variable nozzle mechanisms 35, 45. However, maintaining a constant exhaust pressure requires a heat-resistant pressure sensor for monitoring the exhaust pressure, and a control valve that enables fine adjustments of the amount of exhaust air and the VN opening degrees of the variable nozzle mechanisms 35, 45. This may lead to increase in cost. Thus, it is necessary to reduce the fluctuation in boost pressure during execution of the control for switching the forced induction mode in a simpler configuration.

Accordingly, in the present embodiment, when there is a request for execution of the switching control for switching from the single forced induction mode to the twin forced induction mode, the control device 200 controls the variable nozzle mechanisms 35, 45 so that the VN opening degree VN1 of the forced induction device 30 is equal to the VN opening degree VN2 of the forced induction device 40. The control device 200 executes the approach-run operation, and switches to the twin forced induction mode when the second boost pressure Ps reaches the first boost pressure Pp during the approach-run operation.

By doing so, the decline in the first boost pressure Pp can be curbed when the mode switches from the single forced induction mode to the twin forced induction mode. As a result, the occurrence of torque shock due to fluctuation in boost pressure can be reduced. This control can be performed by equalizing the opening degrees VN1, VN2 of the variable nozzle mechanisms 35, 45, which means that the fluctuation in boost pressure can be reduced in a simple configuration.

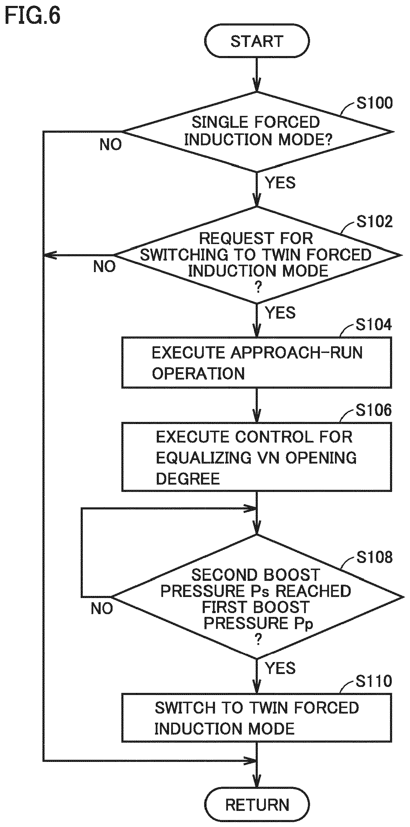

With reference to Fig. 6, a process to be executed by the control device 200 in the present embodiment is hereinafter described. Fig. 6 is a flowchart showing one example of a process to be executed by the control device 200. The process shown in this flowchart is called from a main routine (not shown) for execution each time a prescribed control period elapses.

At step 100 (hereinafter, the step is abbreviated to S), the control device 200 determines whether or not the forced induction mode is the single forced induction mode. For example, when the flag for selecting the single forced induction mode is in an on-state, the control device 200 determines that the forced induction mode is the single forced induction mode. When it is determined that the forced induction mode is the single forced induction mode (YES at S100), the process goes on to S102.

At S102, the control device 200 determines whether or not there is a request for switching to the twin forced induction mode. For example, when the flag for requesting switching to the twin forced induction mode is in an on-state, the control device 200 determines that there is a request for switching to the twin forced induction mode. When it is determined that there is a request for switching to the twin forced induction mode (YES at S110), the process goes on to S104.

At S104, the control device 200 executes the approach-run operation. The operation of the forced induction system at the time of execution of the approach-run operation is as described above, and thus the detailed description thereof is not repeated.

At S106, the control device 200 executes the control for equalizing the VN opening degree. Specifically, the control device 200 controls the VN opening degrees of the variable nozzle mechanisms 35, 45 so that they are equal to each other and equivalent to the lower limit value (the value of the most closed state).

At S108, the control device 200 determines whether or not the second boost pressure Ps has reached the first boost pressure Pp. Specifically, the control device 200 determines whether or not the value obtained by subtracting the second boost pressure Ps (detected by the second pressure sensor 108) from the first boost pressure Pp (detected by the first pressure sensor 106) is less than or equal to a threshold value α. When it is determined that the value obtained by subtracting the second boost pressure Ps from the first boost pressure Pp is less than or equal to the threshold value α, it is determined that the second boost pressure Ps has reached the first boost pressure Pp. When it is determined that the second boost pressure Ps has reached the first boost pressure Pp (YES at S108), the process goes on to S110.

At S110, the control device 200 switches the forced induction mode to the twin forced induction mode. The operation of the forced induction system at the time of the twin forced induction mode is as described above, and thus the detailed description thereof is not repeated.

When it is determined that the mode is not the single forced induction mode (NO at S100), or when it is determined that there is no request for switching (NO at S102), the process ends. When it is determined that the second boost pressure Ps has not reached the first boost pressure Pp (NO at S108), the process is returned to S108.

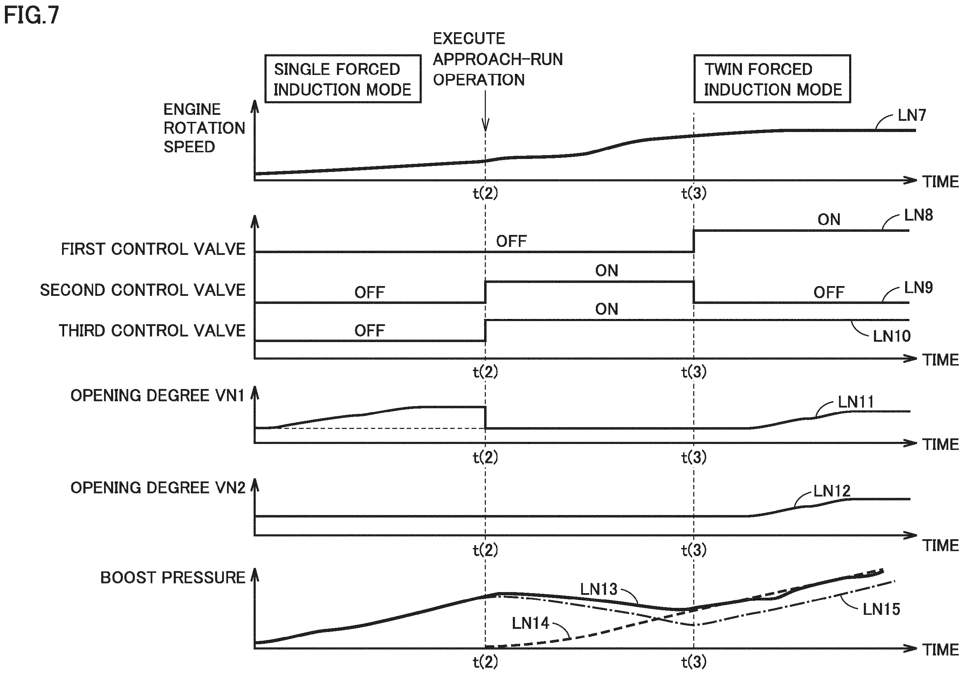

The operation of the control device 200 in the present embodiment based on the structure and the flowchart as described above will now be described with reference to Fig. 7. Fig. 7 is a diagram for explaining one example of the operation of the control device 200. LN7 in Fig. 7 indicates the change in the engine revolution rate NE. LN8 in Fig. 7 indicates the change in the open/closed status of the first control valve 62. LN9 in Fig. 7 indicates the change in the open/closed status of the second control valve 64. LN10 in Fig. 7 indicates the change in the open/closed status of the third control valve 66. LN11 in Fig. 7 indicates the change in the VN opening degree VN1 of the variable nozzle mechanism 35. LN12 in Fig. 7 indicates the change in the VN opening degree VN2 of the variable nozzle mechanism 45. LN13 in Fig. 7 indicates the change in the first boost pressure Pp at the time when the control for equalizing the VN opening degree is executed. LN14 (broken line) in Fig. 7 indicates the change in the second boost pressure Ps at the time when the control for equalizing the VN opening degree is executed. LN15 (dot-and-dash line) in Fig. 7 indicates the change in the first boost pressure Pp at the time when the control for equalizing the VN opening degree is not executed.

For example, suppose the vehicle starts to move and the accelerator opening angle gradually increases. When the operating status of the engine 1 is a low-load operation, the forced induction system operates in the single forced induction mode (YES at S100). Accordingly, as indicated by LN8, LN9, and LN10 in Fig. 7, the first control valve 62, the second control valve 64, and the third control valve 66 are all closed (off-state). At this time, as described with reference to Fig. 2, the intake air from the air cleaner 20 is compressed by the forced induction device 30 and is supplied to the engine 1. Thus, as indicated by LN7 in Fig. 7, the amount of exhaust air increases as the engine revolution rate NE increases. Thus, as indicated by LN13 in Fig. 7, the first boost pressure Pp increases.

At the time t(2) when there is a request for switching from the single forced induction mode to the twin forced induction mode (e.g. when the revolution rate of the forced induction device 30 exceeds a threshold value) (YES at S102), the approach-run operation is executed (S104). Accordingly, as indicated by LN8, LN9, and LN10 in Fig. 7, the first control valve 62 is maintained in a closed state, and the second control valve 64 and the third control valve 66 are both opened (on-state). At this time, as described with reference to Fig. 3, the intake air from the air cleaner 20 is compressed by the forced induction device 30 and is supplied to the engine 1, and the air compressed by the forced induction device 40 is returned to the intake pipe 21.

The exhaust air emitted from the engine 1 flows through the exhaust pipes 51A, 51B, joins together at the connecting portion P1, and then divides into the exhaust pipes 52A, 52B to be supplied to the turbines 32, 42. That is, the exhaust air which flowed only in the exhaust pipe 52A is now flowing both in the exhaust pipes 52A, 52B. Therefore, as indicated by LN7 and LN13 in Fig. 7, after the time t(2), the first boost pressure Pp decreases although the engine revolution rate NE increases. On the other hand, the second boost pressure Ps increases as the engine revolution rate NE increases because the exhaust air begins to be supplied to the turbine 42.

The control for equalizing the VN opening degree is executed so that the VN opening degrees of the variable nozzle mechanisms 35, 45 are equal to each other and equivalent to the lower limit value (S106). Thus, the turbine wheels 34, 44 are supplied with equal levels of exhaust energy per unit time. Accordingly, as indicated by LN13 and LN14 in Fig. 7, the increase in the second boost pressure Ps is promoted while curbing the decline in the first boost pressure Pp. This provides a good balance between the decrease amount in the first boost pressure Pp and the increase amount in the second boost pressure Ps, and allows a higher boost pressure at which the second boost pressure Ps equalizes with the first boost pressure Pp than in the case with no control for equalizing the VN opening degree (LN15 in Fig. 7). When it is determined that the second boost pressure Ps has reached the first boost pressure Pp (YES at S108), the forced induction mode is switched to the twin forced induction mode (S110).

At the time t(3) when the mode is switched to the twin forced induction mode, as indicated by LN8, LN9, and LN10 in Fig. 7, the third control valve 66 is maintained in an open state, the first control valve 62 is switched from a closed state to an open state, and the second control valve 64 is switched from an open state to a closed state. At this time, as described above with reference to Fig. 4, the intake air from the air cleaner 20 is compressed by the forced induction devices 30, 40 and is supplied to the engine 1. That is, the intake air discharged from the compressor 31 of the forced induction device 30 and the intake air discharged from the compressor 41 of the forced induction device 40 join together at the connecting portion P3 and are then supplied to the intake manifolds 28A, 28B through the intercooler 25.

The exhaust air emitted from the engine 1 flows through the exhaust pipes 51A, 51B, joins together at the connecting portion P1, and then divides into the exhaust pipes 52A, 52B to be supplied to the turbines 32, 42. Thus, the first boost pressure Pp and the second boost pressure Ps increase as the engine revolution rate NE increases. This can reduce the difference in boost pressure at the time t(3) compared to the case with no control for equalizing the VN opening degree (LN15 in Fig. 7). Thus, the first boost pressure Pp and the second boost pressure Ps can increase with good responsiveness.

As described above, according to the forced induction system in the present embodiment, the VN opening degrees VN1, VN2 are made equal to each other and equivalent to the lower limit value during the approach-run operation. Thus, the turbine wheels 34, 44 of the respective forced induction devices 30, 40 can be supplied with equal levels of exhaust energy. This can promote the increase in the second boost pressure Ps while curbing the decline in the first boost pressure Pp. This provides a good balance between the decrease in the first boost pressure Pp and the increase in the second boost pressure Ps, and allows a high boost pressure at which the second boost pressure Ps reaches the first boost pressure Pp. Thus, when the single forced induction mode switches to the twin forced induction mode, the decline in the first boost pressure Pp can be curbed. As a result, the occurrence of torque shock due to fluctuation in boost pressure can be reduced. This control can be performed by making the opening degrees of the variable nozzle mechanisms 35, 45 equal to each other and equivalent to the lower limit value. This means that the fluctuation in boost pressure can be reduced in a simple configuration. Thus, provided is a forced induction system that can reduce the fluctuation in boost pressure at the time of switching between forced induction modes involving a plurality of forced induction devices, in a simpler configuration.

Further, the first boost pressure Pp is detected by the first pressure sensor 106, and the second boost pressure Ps is detected by the second pressure sensor 108. Thus, whether or not the second boost pressure Ps has reached the first boost pressure Pp can be accurately determined.

Further, at the time of the approach-run operation, the VN opening degrees of the variable nozzle mechanisms 35, 45 are controlled to be equal to each other and equivalent to the lower limit value. Thus, the occurrence of surging can be reduced at the forced induction devices 30, 40 after switching to the twin forced induction mode.

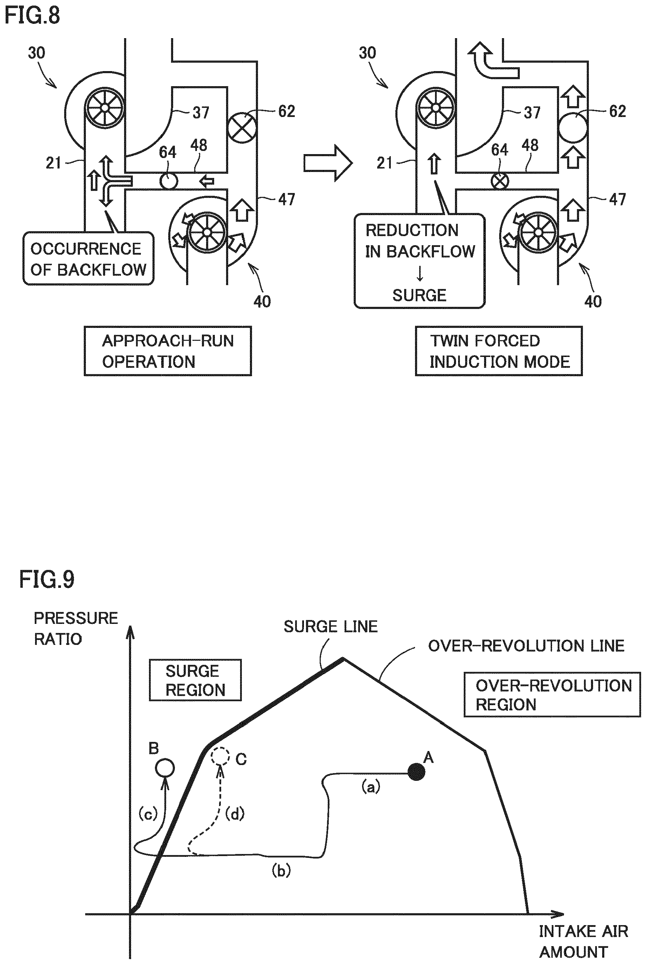

The surging which occurs after switching to the twin forced induction mode is hereinafter described with reference to Fig. 8. Fig. 8 is a diagram for explaining the surging that occurs after switching to the twin forced induction mode.

The left side in Fig. 8 shows a flow of intake air in the forced induction devices 30, 40 at the time of the approach-run operation. The right side in Fig. 8 shows a flow of intake air in the forced induction devices 30, 40 at the time of the twin forced induction mode.

As described above with reference to Fig. 3, at the time of the approach-run operation, in which the first control valve 62 is closed and the second control valve 64 is open, the air discharged from the compressor 41 of the forced induction device 40 flows through the return pipe 48 to the intake pipe 21. At this time, if the flow of exhaust energy concentrates in the turbine 42 of the forced induction device 40 due to some kind of control, or if the VN opening degree of the variable nozzle mechanism 35 is much greater than the VN opening degree of the variable nozzle mechanism 45, the revolution rate of the turbine 42 of the forced induction device 40 increases, while the forced induction device 30 slows down and decreases in flow rate of the compressor 31. As a result, the air flowing from the return pipe 48 to the intake pipe 21 partially flows backward. When the mode is switched to the twin forced induction mode by opening the first control valve 62 and closing the second control valve 64 in such a state, the forced induction device 30 has a low flow rate and a high pressure ratio of the discharge pressure to the intake pressure, which tends to cause surging.

At the time of the approach-run operation, however, the VN opening degrees of the variable nozzle mechanisms 35, 45 are controlled to be equal to each other and equivalent to the lower limit value as described above. Thus, the above-described partial flowback of the air that has flowed from the return pipe 48 to the intake pipe 21 can be prevented. Therefore, when the mode is switched to the twin forced induction mode, the decline in flow rate in the forced induction device 30 can be curbed.

Fig. 9 is a diagram for explaining the change in operating point of the forced induction device 30 on a compressor map. The vertical axis in Fig. 9 indicates the pressure ratio (the ratio of the discharge pressure to the intake pressure in the compressor 31 of the forced induction device 30). The horizontal axis in Fig. 9 indicates the intake air amount taken to the compressor 31 of the forced induction device 30. The thick solid line in Fig. 9 indicates the boundary (surge line) with a region where surging tends to occur in the forced induction device 30. The thin solid line in Fig. 9 indicates the boundary (over-revolution line) with a region where the forced induction device 30 makes an over revolution. In the following description, the left region relative to the surge line is referred to as a surge region, and the right region relative to the over-revolution line is referred to as an over-revolution region.

For example, suppose the operating point defined by the pressure ratio and the intake air amount of the forced induction device 30 at the time of the single forced induction mode is the point A in Fig. 9.

When the approach-run operation is executed during the single forced induction mode, the intake air and the exhaust air start flowing in the forced induction device 40. This decreases the intake air amount taken to the compressor 31 of the forced induction device 30, and also decreases the pressure ratio. That is, the operating point moves from the point A along the pathway (a) and the pathway (b) in Fig. 9. When the mode is switched to the twin forced induction mode while the above-described backflow is occurring in the intake pipe 27, the intake air amount significantly decreases and the pressure ratio increases as described above. As a result, as indicated by the solid line in Fig. 9, the operating point moves along the pathway (c) and reaches the point B in the surge region. That is, the surging tends to occur in the forced induction device 30.

However, the occurrence of backflow can be avoided by controlling the VN opening degrees of the variable nozzle mechanisms 35, 45 so that they are equal to each other and equivalent to the lower limit value at the time of the approach-run operation. Therefore, a significant decline in intake air amount can be prevented when the mode is switched to the twin forced induction mode. As a result, as indicated by the broken line in Fig. 9, the operating point moves along the pathway (d) and reaches the point C on the right side relative to the surge line. That is, the occurrence of surging can be reduced in the forced induction device 30.

Variations are hereinafter described.

In the above-described embodiment, the intake passage in the engine 1 has the forced induction devices 30, 40. However, the intake passage in the engine 1 may also have an intake throttle valve and a gas inlet for exhaust gas recirculation (EGR) of an exhaust gas recirculation device, in addition to the forced induction devices 30, 40, for example.

Further, in the above-described embodiment, the engine 1 is a V6 engine as an example. However, the engine 1 may have other cylinder layouts (e.g. a straight engine or a horizontal engine), for example.

Further, in the above-described embodiment, the revolution rate of the forced induction device 30 is used to determine whether or not there is a request for switching from the single forced induction mode to the twin forced induction mode. However, the determination may be made in terms of the drivability, such as the efficiency of the forced induction device 30 and the operating status (e.g. the acceleration state) of the vehicle, in addition to the revolution rate of the forced induction device 30.

Further, in the above-described embodiment, the forced induction system includes two forced induction devices. However, the forced induction system may include three or more forced induction devices.

Further, in the above-described embodiment, the first pressure sensor 106 detects the pressure in the intake pipe 27A. However, the first pressure sensor 106 has only to detect at least the boost pressure in the compressor 31. For example, the first pressure sensor 106 may also detect the pressure in the intake pipe 37, or may also detect the pressure in the intake pipe 27B.

Further, in the above-described embodiment, the control device 200 switches to the twin forced induction mode when the second boost pressure Ps has reached the first boost pressure Pp. However, the switching may be made at any timing if the second boost pressure Ps reaches the first boost pressure Pp. For example, the control device 200 may switch the forced induction mode to the twin forced induction mode at a prescribed timing after the second boost pressure Ps reaches the first boost pressure Pp.

The above-described variations may be combined in whole or in part.

A forced induction system, as defined by claim 1, includes a first forced induction device and a second forced induction device. Each of the first forced induction device and the second forced induction device includes: a turbine provided on an exhaust passage in an engine, the turbine including a turbine wheel configured to be actuated by exhaust air emitted from the engine; a variable nozzle mechanism configured to adjust an opening degree between adjacent nozzle vanes of a plurality of nozzle vanes disposed at an exhaust air entrance to the turbine wheel; and a compressor provided on an intake passage in the engine, the compressor being configured to compress air to be taken into the engine by actuation of the turbine. The forced induction system also includes a control device configured to execute switching control for switching from a first forced induction mode to a second forced induction mode. The first forced induction mode is a mode in which air compressed in the first forced induction device is supplied to the engine. The second forced induction mode is a mode in which air compressed in the first forced induction device and air compressed in the second forced induction device join together to be supplied to the engine. When the execution of the switching control is requested, the control device is configured to perform control so that a first opening degree of the variable nozzle mechanism in the first forced induction device is equal to a second opening degree of the variable nozzle mechanism in the second forced induction device, and execute an approach-run operation in which air compressed by the compressor of the second forced induction device is supplied to the compressor of the first forced induction device while exhaust air is supplied to the turbine of the second forced induction device. The control device is configured to switch to the second forced induction mode after a second boost pressure produced by the compressor of the second forced induction device reaches a first boost pressure produced by the compressor of the first forced induction device during the approach-run operation.

As such, by controlling the first opening degree to be equal to the second opening degree during the approach-run operation, the respective turbine wheels of the first forced induction device and the second forced induction device can be supplied with equal levels of exhaust energy. This provides a good balance between the decrease in the first boost pressure and the increase in the second boost pressure, and allows a high boost pressure at which the second boost pressure reaches the first boost pressure. Thus, when the first forced induction mode switches to the second forced induction mode, the decline in the first boost pressure can be curbed. As a result, the occurrence of torque shock due to fluctuation in boost pressure can be reduced. This control can be performed by equalizing the opening degrees of the variable nozzle mechanisms, which means that the fluctuation in boost pressure can be reduced in a simple configuration.

Preferably, as defined by claim 2, the control device is configured to, when the execution of the switching control is requested, control the variable nozzle mechanism of each of the first forced induction device and the second forced induction device so that the first opening degree is smaller than before the execution of the approach-run operation and equal to the second opening degree.

As such, by controlling the first opening degree to be smaller than before the execution of the approach-run operation and equal to the second opening degree, the second boost pressure can be quickly increased while curbing the decline in the first boost pressure.

More preferably, as defined by claim 3, the control device is configured to, during the approach-run operation, control the variable nozzle mechanism of each of the first forced induction device and the second forced induction device so that both of the first opening degree and the second opening degree are at a lower limit value.

As such, by controlling the first opening degree and the second opening degree so that both of them are at a lower limit value, the second boost pressure can be quickly increased while curbing the decline in the first boost pressure.

More preferably, as defined by claim 4, the forced induction system further includes: a first pressure sensor configured to detect the first boost pressure; and a second pressure sensor configured to detect the second boost pressure.

As such, whether or not the second boost pressure has reached the first boost pressure can be accurately determined.

Although embodiments of the present disclosure have been described, it is should be understood that the embodiments disclosed herein are by way of example in every respect, not by way of limitation. It is intended that the scope of the present disclosure is defined by the terms of the claims.

## Claims

1. A forced induction system comprising:
a first forced induction device (30) and a second forced induction device (40) each including
a turbine (32, 42) provided on an exhaust passage (51A, 51B, 52A, 52B, 53A, 53B) in an engine (1), the turbine (32, 42) including a turbine wheel (34, 44) configured to be actuated by exhaust air emitted from the engine (1),
a variable nozzle mechanism (35, 45) configured to adjust an opening degree between adjacent nozzle vanes of a plurality of nozzle vanes disposed at an exhaust air entrance to the turbine wheel (34, 44), and
a compressor (31, 41) provided on an intake passage (21, 22, 23, 37, 47, 27A, 27B) in the engine (1), the compressor (31, 41) being configured to compress air to be taken into the engine (1) by actuation of the turbine (32, 42); and
a control device (200) configured to execute switching control for switching from a first forced induction mode to a second forced induction mode, the first forced induction mode being a mode in which air compressed in the first forced induction device (30) is supplied to the engine (1), the second forced induction mode being a mode in which air compressed in the first forced induction device (30) and air compressed in the second forced induction device (40) join together to be supplied to the engine,
**characterized in that**
when the execution of the switching control is requested, the control device (200) being configured to perform control so that a first opening degree of the variable nozzle mechanism (35) in the first forced induction device (30) is equal to a second opening degree of the variable nozzle mechanism (45) in the second forced induction device (40), and execute an approach-run operation in which air compressed by the compressor (41) of the second forced induction device (40) is supplied to the compressor (31) of the first forced induction device (30) while exhaust air is supplied to the turbine (42) of the second forced induction device (40),
the control device (200) being configured to switch to the second forced induction mode after a second boost pressure produced by the compressor (41) of the second forced induction device (40) reaches a first boost pressure produced by the compressor (31) of the first forced induction device (30) during the approach-run operation.

2. The forced induction system according to claim 1, wherein the control device (200) is configured to, when the execution of the switching control is requested, control the variable nozzle mechanism (35, 45) of each of the first forced induction device (30) and the second forced induction device (40) so that the first opening degree is smaller than before the execution of the approach-run operation and equal to the second opening degree.

3. The forced induction system according to claim 1 or 2, wherein the control device (200) is configured to, during the approach-run operation, control the variable nozzle mechanism (35, 45) of each of the first forced induction device (30) and the second forced induction device (40) so that both of the first opening degree and the second opening degree are at a lower limit value.

4. The forced induction system according to any one of claims 1 to 3, further comprising:
a first pressure sensor (106) configured to detect the first boost pressure; and
a second pressure sensor (108) configured to detect the second boost pressure.

## Patentansprüche

1. Zwangsinduktionssystem mit:
einer ersten Zwangsinduktionsvorrichtung (30) und einer zweiten Zwangsinduktionsvorrichtung (40), die jeweils
eine Turbine (32, 42), die an einem Auslassdurchgang (51A, 51B, 52A, 52B, 53A, 53B) in einer Maschine (1) vorgesehen ist, wobei die Turbine (32, 42) ein Turbinenrad (34, 44) hat, das gestaltet ist, um durch eine Auslassluft betätigt zu werden, die von der Maschine (1) ausgestoßen wird,
einen variablen Düsenmechanismus (35, 45), der gestaltet ist, um einen Öffnungsgrad zwischen benachbarten Düsenflügeln einer Vielzahl von Düsenflügeln einzustellen, die an einem Auslasslufteingang zu dem Turbinenrad (34, 44) angeordnet sind, und
einen Kompressor (31, 41) umfassen, der an einem Ansaugdurchgang (21, 22, 23, 37, 47, 27A, 27B) in der Maschine (1) vorgesehen ist, wobei der Kompressor (31, 41) gestaltet ist, um eine Luft, die in die Maschine (1) einzuleiten ist, durch eine Betätigung der Turbine (32, 42) zu komprimieren; und
einer Steuerungsvorrichtung (200), die gestaltet ist, um eine Umschaltsteuerung zum Umschalten von einem ersten Zwangsinduktionsmodus zu einem zweiten Zwangsinduktionsmodus auszuführen, wobei der erste Zwangsinduktionsmodus ein Modus ist, in dem eine Luft, die in der ersten Zwangsinduktionsvorrichtung (30) komprimiert wird, zu der Maschine (1) zugeführt wird, wobei der zweite Zwangsinduktionsmodus ein Modus ist, in dem eine Luft, die in der ersten Zwangsinduktionsvorrichtung (30) komprimiert wird, und Luft, die in der zweiten Zwangsinduktionsvorrichtung (40) komprimiert wird, sich vereinigen, um zu der Maschine zugeführt zu werden,
**dadurch gekennzeichnet, dass**,
wenn die Ausführung der Umschaltsteuerung angefragt ist, die Steuerungsvorrichtung (200) gestaltet ist, um eine Steuerung so durchzuführen, dass ein erster Öffnungsgrad des variablen Düsenmechanismus (35) in der ersten Zwangsinduktionsvorrichtung (30) gleich zu einem zweiten Öffnungsgrad des variablen Düsenmechanismus (45) in der zweiten Zwangsinduktionsvorrichtung (40) ist, und um einen Anfahrlaufbetrieb auszuführen, in dem Luft, die durch den Kompressor (41) der zweiten Zwangsinduktionsvorrichtung (40) komprimiert wird, zu dem Kompressor (31) der ersten Zwangsinduktionsvorrichtung (30) zugeführt wird, während Auslassluft zu der Turbine (42) der zweiten Zwangsinduktionsvorrichtung (40) zugeführt wird,
die Steuerungsvorrichtung (200) gestaltet ist, um zu dem zweiten Zwangsinduktionsmodus umzuschalten, nachdem ein zweiter Ladedruck, der durch den Kompressor (41) der zweiten Zwangsinduktionsvorrichtung (40) erzeugt wird, einen ersten Ladedruck, der durch den Kompressor (31) der ersten Zwangsinduktionsvorrichtung (30) erzeugt wird, während des Anfahrlaufbetriebs erreicht.

2. Zwangsinduktionssystem nach Anspruch 1, wobei die Steuerungsvorrichtung (200) gestaltet ist, um, wenn die Ausführung der Umschaltsteuerung angefragt ist, den variablen Düsenmechanismus (35, 45) von jeder von der ersten Zwangsinduktionsvorrichtung (30) und der zweiten Zwangsinduktionsvorrichtung (40) so zu steuern, dass der erste Öffnungsgrad kleiner als vor der Ausführung des Anfahrlaufbetriebs und gleich zu dem zweiten Öffnungsgrad ist.

3. Zwangsinduktionssystem nach Anspruch 1 oder 2, wobei die Steuerungsvorrichtung (200) gestaltet ist, um, während des Anfahrlaufbetriebs, den variablen Düsenmechanismus (35, 45) von jeder von der ersten Zwangsinduktionsvorrichtung (30) und der zweiten Zwangsinduktionsvorrichtung (40) so zu steuern, dass sowohl der erste Öffnungsgrad als auch der zweite Öffnungsgrad bei einem unteren Grenzwert sind.

4. Zwangsinduktionssystem nach einem der Ansprüche 1 bis 3, des Weiteren mit:
einem ersten Drucksensor (106), der gestaltet ist, um den ersten Ladedruck zu erfassen; und
einem zweiten Drucksensor (108), der gestaltet ist, um den zweiten Ladedruck zu erfassen.

## Revendications

1. Système à induction forcée comprenant :
un premier dispositif à induction forcée (30) et un second dispositif à induction forcée (40) comprenant chacun :
une turbine (32, 42) prévue sur un passage d'échappement (51A, 51B, 52A, 52B, 53A, 53B) dans un moteur (1), la turbine (32, 42) comprenant une roue de turbine (34, 44) configurée pour être actionnée par l'air d'échappement émis par le moteur (1),
un mécanisme de buse variable (35, 45) configuré pour ajuster un degré d'ouverture entre les pales de buse adjacentes d'une pluralité de pales de buse disposées au niveau d'une entrée d'air d'échappement, à la roue de turbine (34, 44), et
un compresseur (31, 41) prévu sur un passage d'admission (21, 22, 23, 37, 47, 27A, 27B) dans le moteur (1), le compresseur (31, 41) étant configuré pour comprimer l'air à prélever dans le moteur (1) par l'actionnement de la turbine (32, 42) ; et
un dispositif de commande (200) configuré pour exécuter la commande de commutation pour passer d'un premier mode d'induction forcée à un second mode d'induction forcée, le premier mode d'induction forcée étant un mode dans lequel l'air comprimé dans le premier dispositif à induction forcée (30) est amené au moteur (1), le second mode d'induction forcée étant un mode dans lequel l'air comprimé dans le premier dispositif à induction forcée (30) et l'air comprimé dans le second dispositif à induction forcée (40) s'assemblent pour être amenés au moteur,
**caractérisé en ce que** :
lorsque l'exécution de la commande de commutation est requise, le dispositif de commande (200) étant configuré pour réaliser la commande de sorte qu'un premier degré d'ouverture du mécanisme de buse variable (35) dans le premier dispositif à induction forcée (30) est égal à un second degré d'ouverture du mécanisme de buse variable (45) dans le second dispositif à induction forcée (40) et exécuter une opération d'approche dans laquelle l'air comprimé par le compresseur (41) du second dispositif à induction forcée (40) est amené au compresseur (31) du premier dispositif à induction forcée (30) alors que l'air d'échappement est amené à la turbine (42) du second dispositif à induction forcée (40),
le dispositif de commande (200) étant configuré pour passer dans le second mode d'induction forcée après qu'une seconde pression de suralimentation produite par le compresseur (41) du second dispositif à induction forcée (40) a atteint une première pression de suralimentation produite par le compresseur (31) du premier dispositif à induction forcée (30) pendant l'opération d'approche.

2. Système à induction forcée selon la revendication 1, dans lequel le dispositif de commande (200) est configuré pour, lorsque l'exécution de la commande de commutation est requise, commander le mécanisme de buse variable (35, 45) de chacun parmi le premier dispositif à induction forcée (30) et le second dispositif à induction forcée (40) de sorte que le premier degré d'ouverture est plus petit qu'avant l'exécution de l'opération d'approche et égal au second degré d'ouverture.

3. Système à induction forcée selon la revendication 1 ou 2, dans lequel le dispositif de commande (200) est configuré pour, pendant l'opération d'approche, commander le mécanisme de buse variable (35, 45) de chacun parmi le premier dispositif à induction forcée (30) et le second dispositif à induction forcée (40) de sorte qu'à la fois le premier degré d'ouverture et le second degré d'ouverture sont à une valeur de limite inférieure.

4. Système à induction forcée selon l'une quelconque des revendications 1 à 3, comprenant en outre :
un premier capteur de pression (106) configuré pour détecter la première pression de suralimentation ; et
un second capteur de pression (108) configuré pour détecter la seconde pression de suralimentation.
